Europäisches Patentamt

European Patent Office

Office européen des brevets

(19)

(11) Veröffentlichungsnummer: **0 265 773 B1**

# (12) EUROPÄISCHE PATENTSCHRIFT

(45) Veröffentlichungstag der Patentschrift: **18.12.91**

(51) Int. Cl.⁵: **G02B 21/00, G02B 21/18**

(21) Anmeldenummer: **87114990.2**

(22) Anmeldetag: **14.10.87**

(54) **Photometertubus für ein Mikroskop.**

(30) Priorität: **28.10.86 DE 3636616**

(43) Veröffentlichungstag der Anmeldung:
**04.05.88 Patentblatt 88/18**

(45) Bekanntmachung des Hinweises auf die
Patenterteilung:
**18.12.91 Patentblatt 91/51**

(84) Benannte Vertragsstaaten:
**CH DE FR GB IT LI**

(56) Entgegenhaltungen:
EP-A- 0 183 416          DE-A- 2 406 415
DE-A- 2 908 334          DE-C- 1 215 954
DE-C- 1 813 499          US-A- 4 527 869

(73) Patentinhaber: **Firma Carl Zeiss**

**W-7920 Heidenheim (Brenz)(DE)**
(84) Benannte Vertragsstaaten:
**CH DE FR IT LI**

Patentinhaber: **CARL ZEISS-STIFTUNG HAN-
DELND ALS CARL ZEISS**

**W-7920 Heidenheim (Brenz)(DE)**
(84) Benannte Vertragsstaaten:
**GB**

(72) Erfinder: **Faltermeier, Bernd, Dr.**
**Mohlstrasse 37**
**W-7080 Aalen(DE)**
Erfinder: **Laubenberger, Martin**
**Gaildorfer Strasse 4**
**W-7157 Murrhardt(DE)**

## Beschreibung

Die bisher bekannten Photometertuben für Mikroskope lassen sich in zwei vom optischen Aufbau her unterschiedliche Typen einteilen:

In Geräten des ersten Typs ist zur Sichtbarmachung der Meßfeldblende der gesamte Beobachtungsstrahlengang über eine sogenannte Umwegschleife geführt und wird dabei an der schräggestellten und meist als Konkavspiegel ausgebildeten Meßfeldblende reflektiert. Solche Geräte sind z.B. in der DE-A 1-24 06 415, der US-A-4 527 869, der DE-A 1-32 13 145 und der DE-A 1-32 03 142 beschrieben. Hier ist es schwierig, die Meßfeldblende variabel zu gestalten oder zu beleuchten. Geräte mit Umwegschleifen besitzen außerdem den Nachteil, daß auf Grund des langen Weges für den Beobachtungsstrahlengang ein Nachvergrößerungsfaktor auftritt, der zu einem dunkleren Bild führt. Dies stört insbesondere die Beobachtung lichtschwach fluoreszierender Objekte.

In Geräten des zweiten Typs ist der Beobachtungsstrahlengang über einen Strahlteiler direkt in den Okulartubus gelenkt. Das Bild der rückwärts beleuchteten Meßfeldblende wird dem im Okulartubus entstehenden Zwischenbild überlagert, indem der Hilfsstrahlengang zur Abbildung der Meßfeldblende koaxial zum Photometriestrahlengang rückwärts geführt und mit Hilfe eines hinter dem zweiten Ausgang des Strahlteilerprisma angeordneten Retroreflektors in den Okulartubus eingespiegelt wird. Solche Geräte sind beispielsweise in der DE-PS-12 15 954, der DE-A1-29 08 334, der CH-PS-615 762 oder der DE-A 1-34 43 728 beschrieben.

Geräte des letztgenannten Typs bieten die Möglichkeit die Meßfeldblende austauschbar zu gestalten und auf einfache Weise zu beleuchten. Sie besitzen jedoch den Nachteil, daß das zur Beleuchtung der Meßfeldblende benötigte Licht im Abbildungsraum, d. h. an der Tubuslinse, am Objektiv oder an sonstigen optischen Elementen im Beobachtungsstrahlengang Reflexe verursacht, die sich dem Bild des Objekts störend überlagern.

In der DE-PS-18 13 499 ist ein Photometertubus beschrieben, in dem der Beobachtungsstrahlengang über einen ersten Strahlteiler direkt in die Okulare reflektiert wird, und bei dem das durch die Meßfeldblende hindurchtretende Licht über eine Umwegschleife geführt und über einen zweiten Strahlteiler dem Beobachtungsstrahlengang wieder überlagert wird. Diese Lösung liefert wegen der Hintereinanderschaltung mehrerer Strahlteiler nur ein recht lichtschwaches Bild der Meßfeldblende.

Es ist die Aufgabe der vorliegenden Erfindung einen Photometertubus für ein Mikroskop zu schaffen, der ein möglichst lichtstarkes und reflexfreies Zwischenbild mit darin sichtbarer Meßfeldblende liefert.

Ausgehend von einem Tubus enthaltend ein Prisma bzw. Prismenschieber mit einem ersten und einem zweiten Bildeingang, von dem das vom Objektiv kommende Licht in einen Beobachtungsstrahlengang und einen Photometriestrahlengang aufgeteilt wird, und eine Einrichtung zur Einspiegelung einer Meßfeldblende über einen Abbildungsstrahlengang in den Beobachtungsstrahlengang, wobei der Abbildungsstrahlengang für die rückwärtig beleuchtete Meßfeldblende teilweise koaxial zur Achse des Photometriestrahlenganges verläuft, wird diese Aufgabe gemäß den im Kennzeichen des Hauptanspruches angegebenen Merkmalen dadurch gelöst, daß ein umschaltbarer Reflektor vorgesehen ist, durch den der Abbildungsstrahlengang c für die Meßfeldblende vom Photometriestrahlengang b getrennt und dem zweiten Bildeingang des Prismas bzw. Prismenschiebers zugeführt wird.

Durch diese Maßnahme kann wie bei Geräten des zweiten Typs eine ebene, unverspiegelte Meßfeldblende verwendet werden, die senkrecht zur optischen Achse des Photometriestrahlenganges angeordnet ist und deshalb leicht auswechselbar ist. Da der Hilfsstahlengang für die rückwärtig beleuchtete Meßfeldblende nicht koaxial zum Photometriestrahlengang in das Teilerprisma eintritt sondern nach Umlenkung dessen zweiten Eingang nutzt, sind Reflexe aus der Meßfeldblendenbeleuchtung vermieden. Es entsteht außerdem ein lichtstarkes Zwischenbild, da der Beobachtungsstrahlengang nicht über Umwegschleifen geführt ist.

Die erfindungsgemäße Lösung vereinigt somit die Vorteile der beiden einleitend genannten Bautypen ohne deren spezifischen Nachteile zu besitzen.

Zweckmäßig ist ein weiterer schaltbarer Reflektor vorgesehen, über den die rückwärtige Beleuchtung der Meßfeldblende in den Photometerstrahlengang eingespiegelt wird. Es ist weiterhin vorteilhaft, diesen zweiten Reflektor, den schaltbaren ersten Reflektor zur Ausspiegelung des Meßfeldblendenstrahlenganges und das Teilerprisma motorisch zu schalten und die jeweiligen Antriebe mit einer Steuereinheit zu koppeln, die einen Speicher für die in den Schaltstellungen "Beobachtung" und "Photometrie" und gegebenenfalls noch "Photographie" oder "TV" miteinander zu kombinierenden Stellungen der Reflektoren bzw. des Teilerprismas enthält.

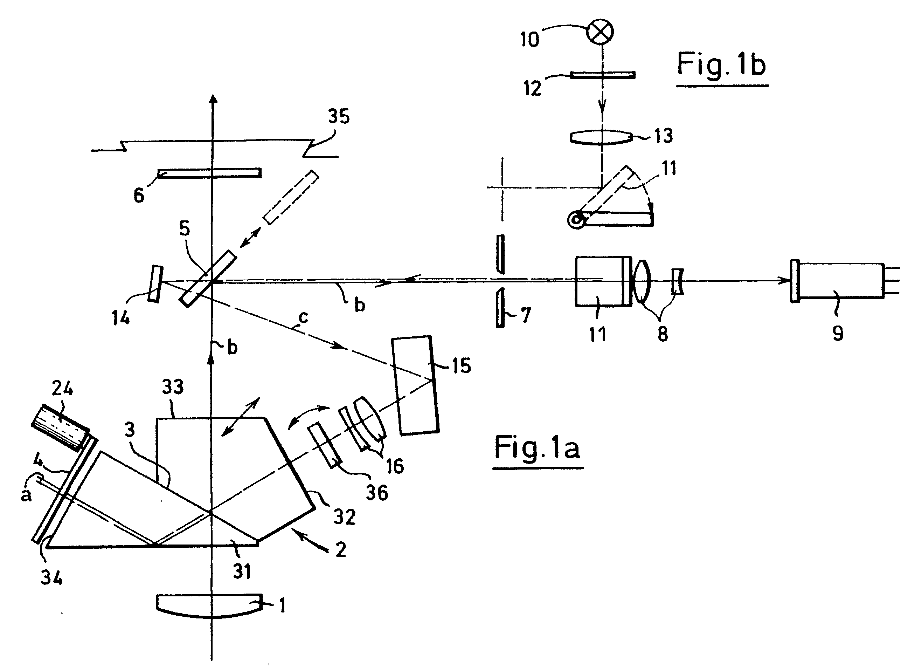

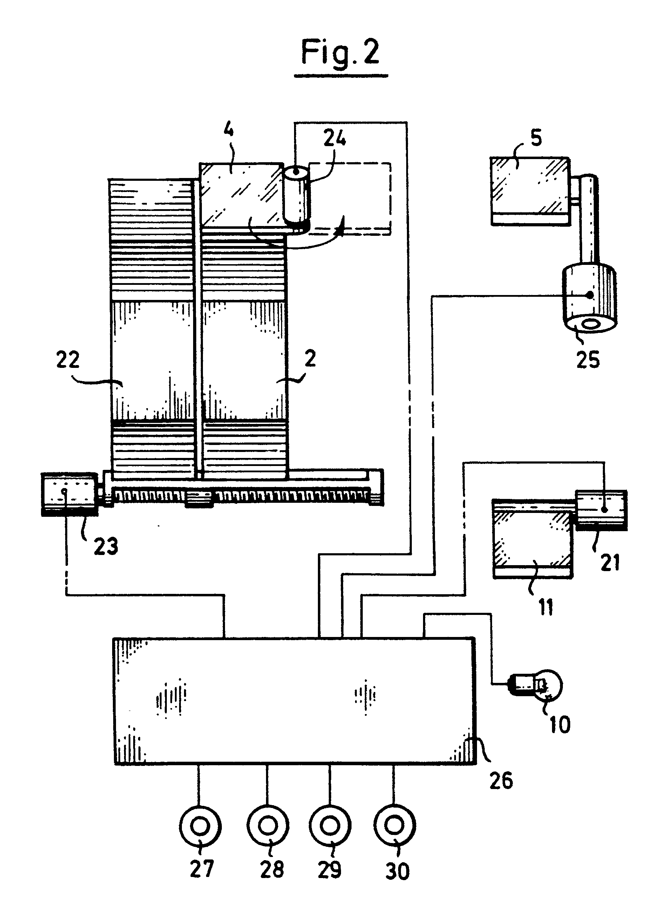

Weitere vorteilhafte Ausgestaltungen der Erfindung ergeben sich aus der nachstehenden Beschreibung eines Ausführungsbeispiels an Hand der Figuren 1 und 2 der beigefügten Zeichnungen:

Fig. 1a    ist eine Prinzipsskizze des Gesamtstrahlenganges in dem neuen Photometertubus;

Fig. 1b    ist eine Prinzipsskizze des vom Spiegel (11) in Figur 1a eingespiegelten Beleuchtungsstrahlenganges für die Meßfeldblende (7);

Fig. 2    stellt ein Blockschaltbild der Antriebe für die schaltbaren optischen Elemente aus Figur 1 dar.

In Figur 1a ist mit (1) die Tubuslinse bezeichnet, die in Verbindung mit dem nicht dargestellten Objektiv des Mikroskops zur Zwischenbilderzeugung verwendet ist. Über der Tubuslinse befindet sich ein Teilerprisma (2), welches das vom Objektiv kommende, in den ersten Bildeingang (31) eintretende Licht in den Beobachtungsstrahlengang (a) hinter dem ersten Bildausgang (34) und den Photometriestrahlengang (b) hinter dem zweiten Bildausgang (33) des Prismas (2) teilt.

Der den ebenfalls hier nicht dargestellten Okularen zugewandte, erste Ausgang (34) des Teilerprismas (2) ist in Schaltstellung "Photometrie" durch eine Einschlagblende (4) verschlossen, die verhindert, daß Falschlicht über die Okulare in den Photometerstrahlengang eindringt. Während der Beobachtung und Auswahl des zu photometrierenden Bereiches kann die Blende (4) durch einen Elektromotor (24) beiseite geschwenkt werden.

Der an der Teilerfläche (3) des Prismas (2) transmittierte Teilstrahlengang (b) für die Photometrie trifft nach Durchtritt durch den zweiten Bildausgang (33) auf einen Spiegel (5) auf und wird an diesem umgelenkt. Hinter dem Spiegel (5) ist in einer Zwischenbildebene die Meßfeldblende (7) angeordnet.

Auf die Meßfeldblende (7) folgt ein Linsensystem (8), das zur Abbildung der Objektivpupille auf die Kathode des Photomultiplyers (9) bzw. den Eintrittspalt eines zwischengeschalteten Monochromators dient.

Das Prisma (2) befindet sich auf einem Schieber, der eine zweite Schaltstellung besitzt, in der ein weiteres Prisma mit anderem Teilerfaktor angeordnet ist. Das Prisma (2) teilt das vom Objektiv kommende Licht im Verhältnis 90/10, d.h es reflektiert 10 Prozent des Lichts in den Beobachtungsstrahlengang (a). Das zweite, in Figur 2 mit (22) bezeichnete Teilerprisma wird in Schaltstellung "Beobachtung" uber die Tubuslinse (1) geschoben und besitzt einen Transmissionsfaktor von 0.1, reflektiert jedoch 90 Prozent des einfallenden Lichts in den Beobachtungsstrahlengang (a).

Zur Sichtbarmachung der Meßfeldblende (7) ist eine Lichtquelle (10) mit vorgeschalteter Streuscheibe (12) und einer Kollimatorlinse (13) vorgesehen. Das von diesen in Figur 1b dargestellten Elementen erzeugte Lichtbündel wird mit Hilfe eines zwischen der Meßfeldblende (7) und dem Linsensystem (8) angeordneten Klappspiegels (11) in den Photometriestrahlengang (b) eingespiegelt. In der Schaltstellung "Beobachtung" befindet sich der Klappspiegel (11) in der gestrichelt gezeichneten Stellung, wodurch die Meßfeldblende (7) von hinten beleuchtet wird. Gleichzeitig ist der ebenfalls schaltbare Umlenkspiegel (5) in die gestrichelt gezeichnete Position bewegt, so daß das durch die Meßfeldblende (7) hindurchtretende Licht auf einen in Schaltstellung "Photometrie" nicht benutzten, weiteren Umlenkspiegel (14) fällt. Der Spiegel (14) ist im Vergleich zum Spiegel (5) stärker gegen die optische Achse geneigt und reflektiert das durch die Meßfeldblende (7) hindurchtretende Licht im spitzen Winkel in Richtung auf ein Dachkantprisma (15). Von dort wird es dem zweiten Eingang (32) des Teilerprismas (2) zugeführt.

Ein im Teilstrahlengang (c) zwischen dem Dachkantprisma (15) und dem zweiten Eingang (32) des Teilerprismas (2) angeordnete Linsensystem (16) bildet die Meßfeldblende (7) in die Zwischenbildebene im Beobachtungsstrahlengang (a) d. h. in den Okulartubus ab, sodaß dem dort entstehenden Bild des Objektes das Bild der hell erleuchteten Meßfeldblende (7) überlagert ist. Das Bild der Meßfeldblende (7) läßt sich relativ zum Objektbild mit Hilfe einer in zwei Richtungen kippbaren Planplatte (36) vor dem zweiten Bildeingang (32) des Prismas (2) feinfühlig justieren.

Oberhalb des schaltbaren Spiegels (5) befindet sich eine Abschlußplatte (6) vor einer Aufnahmeschwalbe (35), an die eine Fernsehkamera oder eine photographische Kamera angesetzt werden kann. Dorthin gelangt in Schaltstellung "Beobachtung", d.h. wenn der Spiegel (5)ausgeschwenkt ist und sich in der gestrichelt dargestellten Stellung befindet, das von der Teilerschicht (3) im Prisma (2) bzw. (22) transmittierte Licht.

Wie Figur 2 zeigt sind der Antrieb (23) für den Prismenschieber, der Antrieb (24) für die Klappblende (4) im Beobachtungsstrahlengang, der Antrieb (25) für den umschaltbaren Spiegel (5), der Antrieb (21) für den Schwenkspiegel (11) und die Glühlampe (10) der Meßfeldblendenbeleuchtung gemeinsam an ein Steuergerät (26) angeschlossen. In diesem Steuergerät (26) sind die zueinander passenden Positionen bzw. Schaltzustände der genannten fünf Bauteile für die Betriebsarten "Beobachtung", Photometrie" und "TV/Photographie" gespeichert und durch Betätigung der drei Eingabetasten (27-29) aufrufbar. Es ist weiterhin eine vierte Eingabetaste (30) vorgesehen, mit der der Benutzer eine für seine Bedürfnisse sinnvolle Schaltkombination aufrufen kann, die er selbst abgespeichert hat. Die vom Benutzer selbst definierte Schaltkombination erlaubt eine TV-Darstellung des Objekts mit eingespiegelter Meßfeldblende im den TV-Bild.

Die Positionen bzw. Schaltzustände sind der Übersichtlichkeitshalber in nachstehender Tabelle zusam-

EP 0 265 773 B1

mengestellt:

|  | Prisma | Blende (4) | Spiegel (5) | Spiegel (11) | Lampe (10) |
|---|---|---|---|---|---|
| Beobachtung | (22) | aus | aus | ein | ein |
| Photometrie | (2) | ein | ein | aus | aus |
| TV/Photo (ohne Meßfeld) | (2) | aus | aus | aus | aus |
| TV/Photo (mit Meßfeld) | (2) | aus | aus | ein | ein |

In der bisher dargestellten Form ist es nicht möglich, gleichzeitig zu photometrieren und das Objekt mit der am Anschluß (35) befestigten z.B. TV-Kamera darzustellen, weil der Spiegel (5) entweder nur die eine oder die andere Betriebsweise ermöglicht. Eine gleichzeitige TV-Darstellung während des Photometriens ist aber möglich, wenn der Spiegel (5) als Strahlteiler ausgebildet ist, oder wenn anstelle des Vollspiegels (5) ein schwenkbarer Strahlteiler an dieser Stelle vorgesehen ist.

## Patentansprüche

1. Photometertubus für ein Mikroskop, enthaltend ein Prisma (2) bzw. Prismenschieber mit einem weiteren Prisma (22), mit einem ersten und einem zweiten Bildeingang, von dem das vom Objektiv kommende Licht in einen Beobachungsstrahlengang (a) und einem Photometriestrahlengang (b) aufgeteilt wird, und eine Einrichtung zur Einspiegelung einer Meßfeldblende (7) über einen Abbildungsstrahlengang (c) in den Beobachtungsstrahlengang (a), wobei der Abbildungsstrahlengang (c) für die rückwärtig beleuchtete Meßfeldblende (7) teilweise koaxial zur Achse des Photometriestrahlenganges (b) verläuft, dadurch gekennzeichnet, daß ein umschaltbarer Reflektor (5) vorgesehen ist, durch den der Abbildungsstrahlengang (c) für die Meßfeldblende (7) vom Photometriestrahlengang (b) getrennt und dem zweiten Bildeingang (32) des Prismas (2) bzw. Prismenschiebers zugeführt wird.

2. Photometertubus nach Anspruch 1, dadurch gekennzeichnet, daß die Abbildungsoptik (16) für die Meßfeldblende in dem ausgespiegelten Teilstrahlengang (c) zwischen dem umschaltbaren Reflektor (5) und dem zweiten Bildeingang (32) des Prismas (2) angeordnet ist.

3. Photometertubus nach Anspruch 1, dadurch gekennzeichnet, daß die rückwärtige Beleuchtung der Meßfeldblende (7) über einen weiteren schaltbaren Reflektor (11) in den Photometriestrahlengang (b) eingespiegelt wird.

4. Photometertubus nach Anspruch 3, dadurch gekennzeichnet, daß der schaltbare Reflektor (5), der weitere schaltbare Reflektor (11) zur Beleuchtung der Meßfeldblende (7) und der Prismenschieber motorisch angetrieben sind und ihre Antriebe (23, 25, 31) über eine Steuereinheit (26) gekoppelt sind, die einen Speicher für die für Beobachtung und Photometrie zu kombinierenden Positionen der Einzelantriebe enthält.

5. Photometertubus nach Anspruch 1, dadurch gekennzeichnet, daß der schaltbare Reflektor (5) teildurchlässig ist.

## Claims

1. Photometer tube for a microscope containing a prism (2) or prism slide with a further prism (22) having a first and a second image inlet, by which the light coming from the objective is split into a viewing ray path (a) and a photometry ray path (b), and means for reflecting a measuring field stop (7) along an imaging ray path (c) into the viewing ray path (a), the imaging ray path (c) for the back-illuminated measuring field stop (7) extending in part coaxial to the axis of the photometry ray path (b), characterized by the fact that a switchable reflector (5) is provided by which the imaging ray path (c) for the measuring field stop (7) is separated from the photometry ray path (b) and is fed to the second image inlet (32) of the prism (2) or prism slide.

2. Photometer tube according to Claim 1, characterized by the fact that the imaging optic (16) for the measuring field stop (7) is arranged in the reflected-out partial ray path (c) between the switchable reflector (5) and the second image inlet (32) of the prism (2).

4

3. Photometer tube according to Claim 1, characterized by the fact that the back-illumination of the measuring field stop (7) is reflected by a further switchable reflector (11) into the photometry ray path (b).

4. Photometer tube according to Claim 3, characterized by the fact that the switchable reflector (5), the further switchable reflector (11) for illuminating the measuring field stop (7) and the prism slide are driven by motor means and their drives (23, 25, 31) are coupled via a control unit (26) which contains a memory for the positions of the individual drives to be combined for observation and photometry.

5. Photometer tube according to Claim 1, characterized by the fact that the switchable reflector (5) is partially transmitting.

**Revendications**

1. Tube photométrique pour un microscope, comprenant un prisme (2) ou une coulisse à prismes, portant un prisme supplémentaire (22), présentant une première et une seconde entrée d'image, par lequel la lumière venant de l'objectif est partagée en un faisceau d'observation (a) et un faisceau de photométrie (b), ainsi qu'un dispositif pour la projection par réflexion d'un diaphragme du champ de mesure (7) au moyen d'un faisceau de reproduction (c) dans le faisceau d'observation (a), le faisceau de reproduction (c) pour le diaphragme du champ de mesure (7), éclairé de l'arrière, s'étendant en partie sur l'axe du faisceau de photométrie (b), caractérisé par la prévision d'un réflecteur commutable (5), par lequel le faisceau de reproduction (c) pour le diaphragme du champ de mesure (7) peut être séparé du faisceau de photométrie (b) et envoyé à la seconde entrée image (32) du prisme (2) ou de la coulisse à prismes.

2. Tube photométrique selon la revendication 1, caractérisé en ce que l'optique de reproduction (16) pour le diaphragme du champ de mesure est placée dans le faisceau partiel (c), extrait par réflexion, entre le réflecteur commutable (5) et la seconde entrée image (32) du prisme (2).

3. Tube photométrique selon la revendication 1, caractérisé en ce que l'éclairement par l'arrière du diaphragme du champ de mesure (7) est projeté par réflexion dans le faisceau de photométrie (b) au moyen d'un autre réflecteur commutable (11).

4. Tube photométrique selon la revendication 3, caractérisé en ce que le réflecteur commutable (5), l'autre réflecteur commutable (11), servant à l'éclairement du diaphragme du champ de mesure (7), et la coulisse à prismes sont entraînés par moteur et leurs entraînements (23, 25, 31) sont couplés par une unité de commande (26) qui contient une mémoire pour les positions à combiner des différents entraînements pour l'observation et la photométrie.

5. Tube photométrique selon la revendication 1, caractérisé en ce que le réflecteur commutable (5) est partiellement transparent.

Fig.1b

Fig.1a

EP 0 265 773 B1

# Fig.2